# EUROPÄISCHE PATENTSCHRIFT

(11) **EP 0 459 121 B1**
(45) Veröffentlichungstag und Bekanntmachung des Hinweises auf die Patenterteilung: **30.11.1994**
(21) Anmeldenummer: 91105928.5
(22) Anmeldetag: 13.04.1991
(51) Int. Cl.: B23Q 11/06, B27B 9/04, B24B 55/04, B24B 23/02

(54) **Führungsschlitten für eine handgeführte Werkzeugmaschine**
Sliding guide for handheld machine tool
Sabot de guidage pour machine portative

(30) Priorität: 30.05.1990 DE 4017405
(43) Veröffentlichungstag der Anmeldung: 04.12.1991
(73) Patentinhaber: ROBERT BOSCH GMBH, 70442 Stuttgart (DE)
(72) Erfinder: Kleider, Albert, W-7170 Schwaebisch Hall (DE)

(56) Entgegenhaltungen:
- DE-A- 2 359 714
- DE-U- 8 308 464
- DE-U- 8 437 711
- US-A- 1 900 553
- US-A- 3 730 239

## Beschreibung

Die Erfindung geht aus von einer Schutzhaube für eine handgeführte Werkzeugmachine, mit einem Führungsschlitten nach der Gattung des Hauptanspruchs. Bei einer bekannten Schutzhaube dieser Art (DE-GM 83 08 464) weist die Befestigungseinrichtung für die Befestigung des Führungsschlittens an der Schutzhaube in Durchbrüchen gehaltene Halteschrauben und schlittenseitig zwei etwa rechtwinklig hochragende Halter mit darin enthaltenen Längsschlitzen auf, die von einem Vierkantabsatz der jeweils zugeordneten Halteschrauben durchsetzt sind, wobei die Halteschrauben mit einem Gewindeabsatz über die Halter des Führungsschlittens überstehen und dort eine Flügelmutter aufschraubbar ist, die über eine Feder und eine am jeweiligen Halter anliegende Scheibe gegen den Halter drückt, so daß jeder Halter des Führungsschlittens mit der vorgegebenen Axialkraft der Feder gegen die zugeordnete Wand der Schutzhaube angepreßt ist. Dieser bekannte Führungsschlitten und dessen Befestigung hat sich im Grunde bewährt. Soll der Führungsschlitten von der Schutzhaube entfernt werden, so müssen je Halter die Flügelmuttern abgeschraubt und die Federn mit Unterlegscheiben vom Gewindebolzen abgenommen und zur Seite gelegt werden, bevor der Führungsschlitten mit seinen beiden Haltern von der Wand der Schutzhaube abgezogen werden kann. Soll umgekehrt der Führungsschlitten wieder an der Schutzhaube befestigt werden, ist in umgekehrter Reihenfolge vorzugehen. Dieses Ablösen bzw. Anschrauben erfordert noch relativ viel Zeit. Außerdem fallen beim Ablösen des Führungsschlittens lose Teile an, die herunterfallen oder verlegt werden können und dann nicht mehr zur Verfügung stehen. Beim Befestigen des Führungsschlittens macht auch das Einfädeln der Unterlegscheiben und Federn auf die Gewindebolzen Mühe und erfordert gewisses Geschick, Geduld und Zeit. Nachteilig ist außerdem, daß der Führungsschlitten relativ zur Schutzhaube beim Anbringen solange in Position gehalten werden muß, bis durch Anziehen der Flügelmuttern und Spannen der Federn eine ausreichende axiale Spannkraft erzeugt ist, die eine Anpressung und Halterung gewährleistet. Auch dies ist mitunter unbequem. Umgekehrt muß man beim Abnehmen des Führungsschlittens darauf achten, daß nach Lockern der Flügelmuttern und dadurch erfolgter Reduzierung der axialen Anpreßkraft der Führungsschlitten relativ zur Schutzhaube nicht von selbst in Richtung der Längsschlitze herabrutscht und irgendwo aufschlägt.

Gemäß GM 84 37 711 ist eine Handkreissäge mit einem Führungsschlitten bekannt, der am Sägengehäuse mittels einer Zapfenverbindung schwenkbar gelagert ist. Die scharnierartige Zapfenverbindung ist nur mittels eines Hilfswerkzeugs lösbar und, wie allgemein bei Handkreissägen üblich, für einen ständigen Verbleib am Sägengehäuse vorgesehen.

### Vorteiie der Erfindung

Die erfindungsgemäße Schutzhaube mit den Merkmalen des Hauptanspruchs hat durch den als modifizierte Renkverbindung ausgestalleten Renkverschluß demgegenüber den Vorteil, daß ein schnelles und werkzeugloses Abnehmen des Führungsschlittens von der Schutzhaube und Anbauen an der Schutzhaube durch eine radiale Bewegung anstatt einer axialen, soust für Renkverbindungen typischen Bewegung moglich ist, so daß z. B. eine Handwerkzeugmaschine sehe rasch und komplikationslos auf die jeweiligen Einsatzfälle umgerüstet werden kann, bei denen entweder ein Führungsschlitten benötigt wird oder aber stört und abgebaut werden muß. Das Anbringen bzw. Abnehmen des Führungsschlittens erfordert keine besonderen Fachkenntnisse und auch keine besondere Aufmerksamkeit. Ferner fallen keine losen und verlierbaren Teile an, so daß die Funktionsfähigkeit der Befestigungseinrichtung dauerhaft gewährleistet ist. Außerdem bedarf es keiner besonderen Bemühungen beim Abnehmen oder Anbringen des Führungsschlittens z. B. dergestalt, daß irgendwelche Elemente, wie Federn, Unterlegscheiben od. dgl., eingefädelt oder ausgefädelt werden müssen.

Durch die in den Unteransprüchen aufgeführten Maßnahmen sind vorteilhafte Weiterbildungen und Verbesserungen der im Hauptanspruch angegebenen Schutzhaube möglich.

### Zeichnung

Ein Ausführungsbeispiel der Erfindung ist nachstehend anhand der Zeichnungen näher erläutert. Es zeigen:
- Fig. 1: eine schematische, teilweise geschnittene Seitenansicht eines Teiles einer handgeführten Werkzeugmaschine mit Schutzhaube und daran angebrachtem Führungsschlitten,
- Fig. 2: einen Schnitt entlang der Linie II-II in Fig. 1 in größerem Maßstab,
- Fig. 3: einen Schnitt entlang der Linie III-III in Fig. 2,
- Fig. 4: eine vergrößerte Seitenansicht des Ausschnittes IV in Fig. 1,
- Fig. 5: einen Schnitt entlang der Linie V - V in Fig. 2.

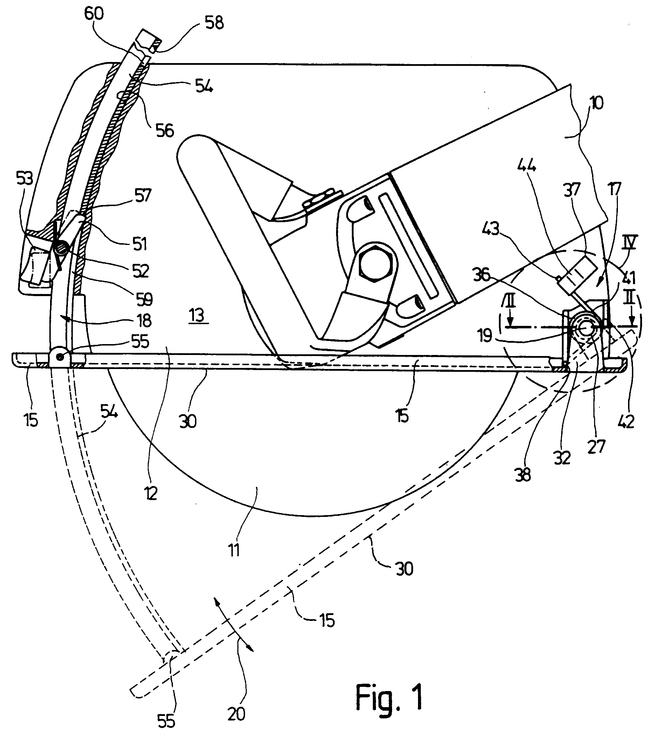

In Fig. 1 ist schematisch ein Teil einer handgeführten Werkzeugmaschine 10 gezeigt, die z. B. aus einem Winkelschleifer und hierbei insbesondere beispielsweise aus einem Diamanttrennschleifer besteht, der im Speziellen zum Trennen von Kunststein, Naturstein od. dgl. Materialien besonders geeignet ist.Die Handwerkzeugmaschine 10 ist mit einem umlaufend angetriebenen Werkzeug 11 versehen, das im Fall der Ausbildung als Winkelschleifer z. B. als Schleifscheibe ausgebildet ist. An der Werkzeugmaschine 10 ist mittels einer nicht weiter gezeigten Halterung eine Schutzhaube 12 befestigt, die zwei zueinander im wesentlichen parallel verlaufende und am Rand einstückig miteinander verbundene Wände 13 und 14 aufweist und zumindest ganz grob etwa Halbkreisform hat. Der Abstand zwischen den Wänden 13, 14 ist so groß, daß dazwischen das Werkzeug 11 frei drehbar ist, das mittels der Schutzhaube 12 zumindest auf seinem wesentlichen oberen Bereich rundum abgedeckt ist.

An der Schutzhaube 12 ist ein Führungsschlitten 15 angebracht, der mittels einer Befestigungseinrichtung 16 lösbar daran gehalten ist. Die Befestigungseinrichtung 16 weist einerseits einen Renkverschluß 17 auf, der an dem einen, in Fig. 1 rechts befindlichen Endbereich des Führungsschlittens 15 und der Schutzhaube 12 vorgesehen ist. Ferner weist die Befestigungseinrichtung 16 in Abstand von dem Renkverschluß 17 eine lösbare Riegelvorrichtung 18 zwischen dem Führungsschlitten 15 und der Schutzhaube 12 auf. Mittels der Riegelvorrichtung 18 ist der an der Schutzhaube 12 angebrachte Führungsschlitten 15 zumindest in der Funktionsstellung, die in Fig. 1 - 3 mit durchgezogenen Linien gezeigt ist, an der Schutzhaube 12 verriegelbar.

Der Führungsschlitten 15 ist um die Lagerachse 19 des Renkverschlusses 17 schwenkbar in Pfeilrichtung 20 an der Schutzhaube 12 halterbar.

Im einzelnen weist der Renkverschluß 17 mindestens eine Lageröffnung sowie mindestens einen diese Lageröffnung quer durchsetzenden Bolzen auf, wobei der Bolzen am Führungsschlitten 15 oder statt dessen auch an der Schutzhaube 12 angebracht sein kann und in entsprechender Weise die mindestens eine Lageröffnung am anderen Teil angebracht ist. Beim gezeigten Ausführungsbeispiel weist die Schutzhaube 12 an einem Endbereich in jeder Wand 13, 14 eine zur Lagerachse 19 koaxiale Lageröffnung 21 bzw. 22 auf. Diese ist über je eine zugeordnete Schlitzöffnung 23 bzw. 24 nach außen, z. B. nach unten, geöffnet, an die sich jeweils eine sich nach außen erweiternde Einführöffnung 25 bzw. 26 anschließt.

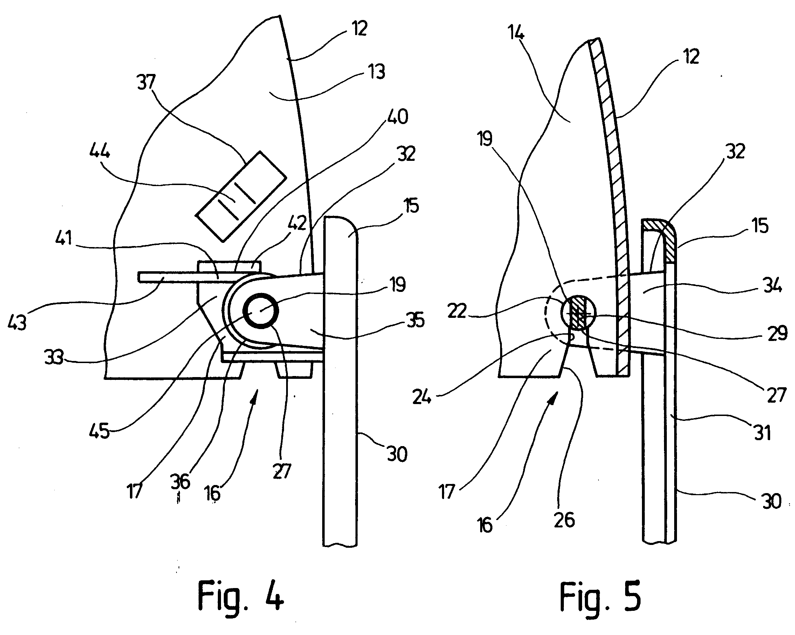

Den Lageröffnungen 21, 22 der Schutzhaube 12 ist am Führungsschlitten 15 ein Lagerbolzen 27 zugeordnet, der fest am Führungsschlitten 15 gehalten ist und im Bereich jeder Lageröffnung 21 bzw. 22 mit einer Abflachung 28 bzw. 29 versehen ist. Der Durchmesser der Lageröffnung 21, 22 entspricht im wesentlichen demjenigen des Bolzens 27. Die Einführöffnung 25, 26 ist schmaler. Ihre Breite entspricht etwa derjenigen der jeweils zugeordneten Abflachung 28 bzw. 29, so daß in der in Fig. 5 gezeigten Ausrichtung des Führungsschlittens 15 in Bezug auf die Schutzhaube 12 die jeweilige Abflachung 28 bzw. 29 etwa in Richtung der zugeordneten Schlitzöffnung 23 bzw. 24 ausgerichtet ist und auf diese Weise, erleichtert durch die sich nach außen erweiternde Einführöffnung 25, 26, beim Anbringen des Führungsschlittens 15 an der Schutzhaube 12 die Abflachungen 28, 29 am Bolzen 27 schnell und einfach durch die Schlitzöffnung 23 bzw. 24 bis in die Lageröffnung 21 bzw. 22 eingeführt werden können, woraufhin nach Schwenken des Führungsschlittens 15 um die Lagerachse 19 in Fig. 5 im Uhrzeigersinn der am Führungsschlitten 15 feste Bolzen 27 mitgeschwenkt wird und dabei dessen Abflachungen 28, 29 in der Lageröffnung 21 bzw. 22 so gedreht werden, daß diese darin nun gehalten sind und ein Herausrutschen durch die Schlitzöffnung 23 bzw. 24 nicht mehr möglich ist. Man erkennt, daß zum Einführen des Bolzens mit den Abflachungen 28, 29 in die zugeordnete Lageröffnung 21, 22 die Abflachungen 28, 29 zur Schlitzöffnung 23 bzw. 24 etwa parallel ausgerichtet sein müssen.

Auch wenn beim gezeigten Ausführungsbeispiel in jeder Wand 13, 14 der Schutzhaube 12 eine Lageröffnung 21 bzw. 22 beschriebener Art vorgesehen ist und am Bolzen 27 jeweils eine zugeordnete Abflachung 28, 29, versteht es sich gleichwohl, daß auch nur eine solche Lageröffnung und eine zugeordnete Abflachung ausreichend sein kann, wobei im übrigen die Anordnung auch kinematisch umgekehrt sein kann.

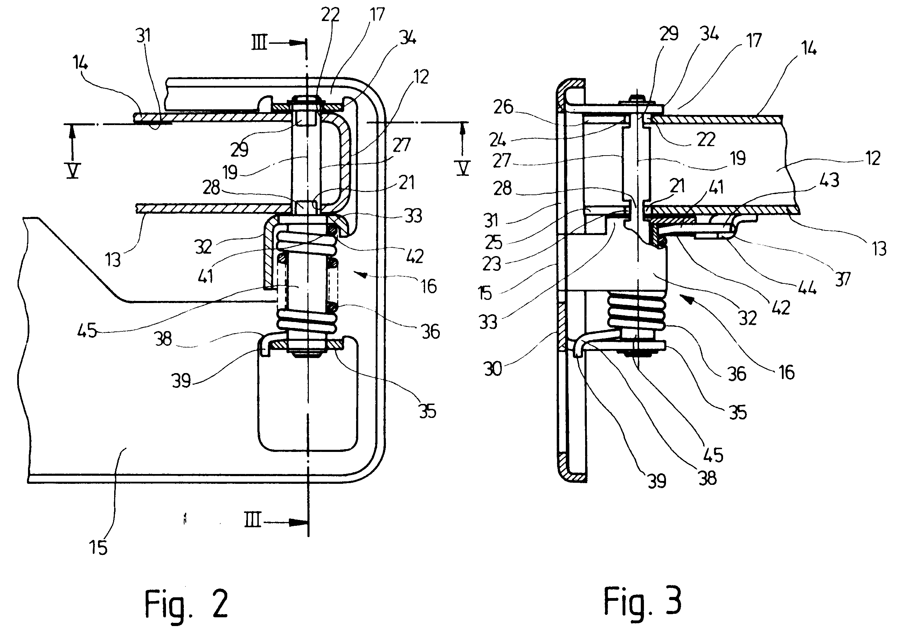

Der Führungsschlitten 15 weist auf seiner in Funktionsstellung unteren Seite eine Führungsfläche 30 auf. Dort, wo das Werkzeug 11 über den Führungsschlitten 15 hinaus gemäß Fig. 1 nach unten übersteht, ist der Führungsschlitten 15 mit einem Durchtrittsschlitz 31 versehen. Man erkennt insbesondere aus Fig. 3 und 5, daß die beiden Abflachungen 28, 29 des Bolzens 27 jeweils mit ihren Flachseiten etwa parallel zur Führungsfläche 30 des Führungsschlittens 15 ausgerichtet sind. Der Bolzen 27 ist am in Fig. 1 und 2 rechts befindlichen Endbereich des Führungsschlittens 15 fest angebracht und hierbei z. B. an einem abstehenden Lagerbock 32 des Führungsschlittens 15 gehalten, der vorzugsweise aus abgebogenen Lappen 33, 34 und 35 gebildet ist. Man erkennt, daß die beiden Abflachungen 28, 29 des Bolzens 27 gleichgerichtet sind und in Richtung der Längsachse 19 in einem solchen Abstand voneinander angeordnet sind, der dem Abstand der Wände 13 und 14 voneinander zumindest im wesentlichen entspricht. Dabei können die Abflachungen 28, 29 hinsichtlich ihrer Längserstreckung durchaus größer als die Querschnittsdicke jeder Wand 13,14 sein.

Der Führungsschlitten 15 ist mit einer daran gehaltenen Feder 36 in Form einer Schenkelfeder versehen, die hier koaxial zur Lagerachse 19 angeordnet ist. Über diese Feder 36 ist eine Federvorspannung zwischen der Schutzhaube 12 und dem Führungsschlitten 15 möglich, die ein Moment um die Lagerachse 19 im Gegenuhrzeigersinn gemäß Fig. 1, 4 und 5 erzeugt. Die Feder 36 ist Teil des Führungsschlittens 15. Beim Einrenken des Führungsschlittens 15 in die Schutzhaube 12 und beim Schwenken in seine in Fig. 1 - 3 mit durch-gezogenen Linien gezeigte Funktionsstellung ist die Feder 36 mit einem Widerlager 37 der Schutzhaube 12 in Eingriff bringbar, so daß die Feder 36 den Führungsschlitten 15 dann um die Lagerachse 19 des Renkverschlusses 17 aus der Funktionsstellung im Gegenuhrzeigersinn gemäß Fig. 1 in eine demgegenüber abgeschwenkte Stellung federnd beaufschlagt. Die Feder 36 ist mit einem Federteil 38, der aus einem abstehenden Federschenkel mit endseitigem Haken 39 besteht, am Führungsschlitten 15 abgestützt. Der andere Federteil 40, der aus einem etwa stabförmigen, längeren Federschenkel 41 besteht, ist in der in Fig. 4 und 5 gezeigten Stellung des Führungsschlittens 15, in der dessen Führungsfläche 30 etwa vertikal steht, an einem Lappen 42 des Führungsschlittens 15 abgestützt, der jedoch nicht in der in Fig. 1 - 3 mit durch-gezogenen Linien gezeigten Funktionsstellung des Führungsschlittens 15 wirksam ist. Dieser stabförmige Federschenkel 41 der Feder 36 hat einen über den Lappen 42 hinaus überstehenden Endabschnitt 43. Beim Schwenken des Führungsschlittens 15 um die Lagerachse 19 in Fig. 1 im Uhrzeigersinn und dabei z. B. aus der dort gestrichelten Schwenklage in die mit durchgezogenen Linien gezeichnete Funktionsstellung verläuft dieser überstehende Endabschnitt 43 innerhalb einer Bahn, in der sich das Widerlager 37 an der Außenseite der Wand 13 der Schutzhaube 12 befindet. Dieses Widerlager 37 ist hier als in diese Bahn hinein quer abstehender Anschlag ausgebildet, der einen zum überstehenden Endabschnitt 43 hin gerichteten Hakenteil 44 hat. Im nicht gezeigten, von der Schutzhaube 12 abgenommenen Zustand des Führungsschlittens 15 ist somit die Feder 36 stärker gespannt, wobei der schlittenseitige Lappen 42 den stabförmigen Federschenkel 41 um die Lagerachse 19 gemäß Fig. 1 im Gegenuhrzeigersinn beaufschlagt, während der andere Federteil 38 ebenfalls vom Führungsschlitten 15 um die Lagerachse 19 im Uhrzeigersinn gemäß Fig. 1 abgestützt ist.
Beim Einsetzen des Führungsschlittens 15 mit dem Renkverschluß 17 in die Schutzhaube 12 in beschriebener Weise und anschließendem Schwenken um die Lagerachse 19 im Uhrzeigersinn gemäß Fig. 1 gelangt nach einem Schwenkwinkel etwa von 45° der überstehende Endabschnitt 43 in den Bereich des Hakenteils 41, wo er abgestützt bleibt, auch wenn der Führungsschlitten 15 in gleicher Richtung noch weiter in die in Fig. 1 - 3 mit durchgezogenen Linien gezeichnete Funktionsstellung geschwenkt wird.

Die Feder 36 ist auf einem zur Lagerachse 19 koaxialen Tragbolzen 45 des Führungsschlittens 15 gehalten, der z. B. mit dem Bolzen 27 fest verbunden sein kann oder auch ein einstückiges Teil mit diesem bilden kann. Der abstehende Lagerbock 32 des Führungsschlittens 15 nimmt dabei auch den Tragbolzen 45 auf, der z. B. mittels der Lappen 33 und 35 gehalten ist. Mit einem Lagerbockteil, z. B. am Lappen 35, bildet der Lagerbock 32 das eine Widerlager für den Haken 39 des Federteils 38.

Die lediglich in Fig. 1 verdeutlichte Riegelvorrichtung 18 weist eine Sperrklinke 51 auf, die von einer Feder 52 belastet und von Hand entriegelbar ist. Die Sperrklinke 51 hat zum Betätigen einen von Hand zugänglichen Drücker 53. Teil der Riegelvorrichtung 18 ist ferner eine Führungslasche 54, in die die Sperrklinke 51 in einer oder mehreren Stellungen des Führungsschlittens 15 verriegelnd eingreifen kann.Eine solche Stellung ist z.B.die in Fig. 1 mit durchgezogenen Linien gezeigte Funktionsstellung des Führungsschlittens 15, in der eine solche Verriegelung erfolgen kann, aber nicht zwingend erfolgen muß. Eine andere Stellung ist z.B. die demgegenüber im Gegenuhrzeigersinn um die Lagerachse 19 z.B. um einen Winkel von etwa 45° geschwenkte, in Fig. 1 gestrichelt dargestellte Schwenkstellung, in der eine Verriegelung auf jeden Fall, schon aus Sicherheitsgründen, erfolgen sollte.

Beim gezeigten Ausführungsbeispiel ist die Sperrklinke 51 an der Schutzhaube 12 und die Führungslasche 54 am Führungsschlitten 15 angeordnet. Man erkennt, daß die Verhältnisse auch vertauscht sein können.

Die Führungslasche 54 ist als Kreisbogensegmentteil ausgebildet, der mit einem Ende 55 gelenkig am Führungsschlitten 15 angreift. Die Schutzhaube 12 weist eine der Form der Führungslasche 54 angepaßte Aufnahme 56, z. B. einen Schlitz, auf, in der die Führungslasche 54 geführt ist. Die Führungslasche 54 kann entlang ihrer Bogenform ein oder mehrere,z.B. zwei beabstandete, Anschläge 57 und 58 für die Sperrklinke 51 haben. Dabei ist der Anschlag 57 der Verriegelung in der in Fig. 1 - 3 mit durchgezogenen Linien gezeigten Funktionsstellung zugeordnet, während der andere Anschlag 58 der in Fig. 1 mit gestrichelten Linien gezeigten, etwa um 45° abgeschwenkten Schwenkstellung des Führungsschlittens 15 zugeordnet ist.

Die Führungslasche 54 kann z.B. entlang ihrer Bogenform eine oder mehrere, z.B. zwei beabstandete und aufeinanderfolgende, Durchgriffsöffnungen 59, 60 enthalten, die von der Sperrklinke 51 durchgreifbar sind. Dabei kann das Ende der einen Durchgriffsöffnung 59 den Anschlag 57 zur Sicherung der Funktionsstellung bilden, während das Ende der anderen Durchgriffsöffnung 60 den Anschlag 58 zur Sicherung der in Fig. 1 gestrichelt angedeuteten Schwenkstellung bilden kann.

Soll der an der Schutzhaube 12 angebrachte Führungsschlitten 15 abgenommen werden, so wird die Sperrklinke 51 durch Drücken am Drücker 53 betätigt, die gemäß Fig. 1 mit ihrer oben befindlichen Sperrnase im Gegenuhrzeigersinn schwenkt und damit nicht mehr am Anschlag 57 anliegt. Dadurch wird die Führungslasche 54 in diesem Bereich freigegeben, so daß aufgrund der Feder 36 beim Renkverschluß 17 der Führungsschlitten 15 um die Lagerachse 19 gemäß Fig. 1 im Gegenuhrzeigersinn z. B. in die in Fig. 1 gestrichelt angedeutete Schwenkstellung geschwenkt wird. Diese Schwenkbewegung erfolgt durch die Kraft der Feder 36 und dabei soweit, bis der Lappen 42 am Führungsschlitten 15 am stabförmigen Federschenkel 41 anschlägt. Bei dieser Schwenkbewegung im Gegenuhrzeigersinn um die Lagerachse 19 erfolgt eine Begrenzung der Schwenkung dadurch, daß die Sperrklinke 51 am anderen Anschlag 58 anschlägt, wodurch z. B. die in Fig. 1 gestrichelt gezeigte Schwenkstellung gesichert ist. Durch weiteres Schwenken des Führungsschlittens 15 um die Lagerachse 19 im Gegenuhrzeigersinn nach Entriegeln der Sperrklinke 51 wird der stabförmige Federschenkel 41 vom Lappen 42 am Führungsschlitten 15 mitgenommen und der überstehende Endabschnitt 43 aus dem haubenseitigen Hakenteil 44 herausbewegt. Wenn bei dieser Schwenkbewegung der Führungsschlitten 15 schließlich die in Fig. 4 und 5 gezeigte, etwa vertikale Ausrichtung eingenommen hat, somit also etwa nach einem 90°-Schwenkwinkel, verlaufen die Flachseiten der Abflachungen 28, 29 des Bolzens 27 in Richtung der zugeordneten Schlitzöffnungen 23,24, so daß in dieser Stellung nunmehr der Führungsschlitten 15 in diesem Bereich herausgenommen werden kann, wobei es sich versteht, daß zuvor bei dieser Schwenkbewegung die Führungslasche 54 den Bereich der Aufnahme 56 der Schutzhaube 12 verlassen hat und von der Schutzhaube 12 freigegeben wurde.

Das Anbringen und Befestigen des Führungsschlittens 15 an der Schutzhaube 12 erfolgt in umgekehrter Reihenfolge, wobei die Führungslasche 54 in die Aufnahme 56 eingeführt wird und durch Einfallen der Sperrklinke 51 hinter den Anschlag 57 selbsttätig in der Funktionsstellung gesichert wird.

Die Riegelvorrichtung 18, insbesondere die Führungslasche 54 und die Sperrklinke 51, sind bei einem anderen nicht gezeigten Ausführungsbeispiel in vorteilhafter Weise - verglichen mit der Darstellung in den Zeichnungen - dieser gegenüber um 90° gedreht angeordnet, so daß der Drücker 53 statt radial achsparallel zur Schutzhaube 12 betätigt wird.

Bei einem anderen, nicht gezeigten Ausführungsbeispiel ist die Riegelvorrichtung so gestaltet, daß der Führungsschlitten 15 wahlweise stufenlos in der gewünschten Stellung verriegelbar ist. Hierzu dient z.B. ein Knebelschalter.

Man erkennt, daß somit die Befestigungseinrichtung 16 beschriebener Art ein schnelles und werkzeugloses Abnehmen des Führungsschlittens 15 von der Schutzhaube 12 sowie Anbauen daran ermöglicht. Somit kann die Werkzeugmaschine 10 rasch für Einsatzfälle umgerüstet werden, bei denen entweder ein Führungsschlitten 15 benötigt und angebracht werden soll oder statt dessen stört und deswegen entfernt werden soll. Das Abnehmen und Anbringen des Führungsschlittens 15 bedingt kein besonderes Entspannen bzw. Spannen oder Ausfädeln bzw. Einfädeln irgendwelcher Elemente, z. B. auch von Federn. Ferner benötigt die Befestigungseinrichtung 16 keinerlei lose und verlierbare Teile; denn sämtliche am Führungsschlitten 15 angeordnete Elemente des Renkverschlusses 17 sind dort verliersicher und funktionsbereit gehalten, ebenso wie die zugeordneten und bei der Schutzhaube 12 vorgesehenen Elemente des Renkverschlusses 17 dort fest angebracht sind. Gleiches gilt auch für die Riegelvorrichtung 18. Diese und der Renkverschluß 17 sind einfach und betriebssicher. Die einzelnen Elemente sind herstellungstechnisch einfach zu verwirklichen und bedingen daher keinen merklich größeren Aufwand. Das beschriebene, schnelle und werkzeu lose Abnehmen und Anbringen des Führungsschlittens 15 an Schutzhaube 12 erfordert keine besonderen Fachkenntnisse und auch kein besonderes Geschick, so daß diese Arbeiten jederzeit auch von ungeschulten Bedienungspersonen der Werkzeugmaschine 10 vorgenommen werden können.

## Patentansprüche

1. Schutzhaube für eine handgeführte Werkzeugmaschine (10) mit einem umlaufenden Werkzeug (11), wie Schleifscheibe, Kreissäge od. dgl., mit einem Führungsschlitten (15), der an der Schutzhaube (12) mittels einer Befestigungseinrichtung (16) lösbar befestigbar ist, **dadurch gekennzeichnet,** daß die Befestigungseinrichtung (16) einen Renkverschluß (17) aufweist, der an einem Endbereich des Führungsschlittens (15) und der Schutzhaube (12) vorgesehen ist, wobei der Renkverschluß (17) zumindest eine Lageröffnung (21, 22) sowie mindestens einen letztere quer durchsetzenden Bolzen (27) aufweist und daß der Bolzen (27) auf dem die Lageröffnung (21, 22) durchsetzenden Bereich eine Abflachung (28, 29) und die Lageröffnung (21, 22) eine der Breite der Abflachung (28, 29) etwa entsprechende, radiale Schlitzöffnung (23, 24) zum Einführen der Abflachung (28, 29) in dazu etwa paralleler Ausrichtung aufweist.

2. Schutzhaube nach Anspruch 1, **dadurch gekennzeichnet,** daß die Befestigungseinrichtung (16) in Abstand von dem Renkverschluß (17) eine lösbare Riegelvorrichtung (18) zwischen dem Führungsschlitten (15) und der Schutzhaube (12) aufweist, mittels der der angebrachte Führungsschlitten (15) in einer Stellung oder mehreren Stellungen an der Schutzhaube (12) verriegelbar ist.

3. Schutzhaube nach Anspruch 1 oder 2, **dadurch gekennzeichnet,** daß der Führungsschlitten um die Lagerachse (19) des Renkverschlusses (17) schwenkbar an der Schutzhaube (12) halterbar ist.

4. Schutzhaube nach einem der Anspruche 1-3, **dadurch gekennzeichnet,** daß die mindestens eine Abflachung (28, 29) am Bolzen (27) mit ihren Flachselten etwa parallel zur Führungsfläche (30) des Führungsschlitten (15) ausgerichtet ist.

5. Schutzhaube nach einem der Ansprüche 1-4, **dadurch gekennzeichnet,** daß der Bolzen (27) an einem Endbereich des Führungsschlitten (15) fest angebracht ist.

6. Schutzhaube nach einem der Ansprüche 1 - 5, **dadurch gekennzeichnet,** daß der Bolzen (27) an einem abstehenden, vorzugsweise aus abgebogenen Lappen (33 - 35) gebildeten, Lagerbock (32) des Führungsschlitten (15) angeordnet ist.

7. Schutzhaube nach einem der Ansprüche 1 - 6 **dadurch gekennzeichnet,** daß die Schutzhaube (12) an einem Endbereich in jeder Wand (13, 14) eine Lageröffnung (21, 22) aufweist, die über je eine zugeordnete Schlitzöffnung (23, 24) nach außen, z. B. nach unten, geöffnet ist.

8. Schutzhaube nach Anspruch 7, **dadurch gekennzeichnet,** daß sich an jede Schlitzöffnung (23, 24) eine sich nach außen erweiternde Einführöffnung (25, 26) anschließt.

9. Schutzhaube nach einem der Ansprüche 1 - 8, **dadurch gekennzeichnet,** daß der Bolzen (27) zwei gleichgerichtete Abflachungen (28, 29) aufweist, die in Bolzenlängsrichtung in Abstand voneinander angeordnet sind.

10. Schutzhaube nach einem der Ansprüche 1 - 9, **dadurch gekennzeichnet,** daß der Führungsschlitten eine daran, vorzugsweise im Bereich des Renkverschlusses (17), gehaltene Feder (36) aufweist, die beim Einrenken des Führungsschlitten (15) in die Schutzhaube (12) und beim Schwenken in dessen Funktionsstellung mit einem Widerlager (37) der Schutzhaube (12) in Eingriff bringbar ist und den Führungsschlitten (15) um die Lagerachse (19) des Renkverschlusses (17) aus seiner Funktionsstellung in eine abgeschwenkte Stellung federnd beaufschlagt.

11. Schutzhaube nach Anspruch 10, **dadurch gekennzeichnet,** daß die Feder (36) mit einem Federteil (38) am Führungsschlitten (15) abgestützt ist.

12. Schutzhaube nach Anspruch 10 oder 11, **dadurch gekennzeichnet,** daß der andere Federteil (40) an einem Lappen (42) des Führungsschlittens (15) abgestützt ist und mit einem über den Lappen (42) hinaus überstehenden Endabschnitt (43) beim Schwenken des Führungsschlittens (15) um die Lagerachse (19) des Renkverschlusses (17) in Richtung seiner Funktionsstellung innerhalb einer Bahn verläuft, in der sich ein an der Schutzhaube (12) quer abstehender Anschlag befindet, an dem der Endabschnitt (43) dann als Widerlager (37) abstützbar ist.

13. Schutzhaube nach einem der Ansprüche 1 - 12, **dadurch gekennzeichnet,** daß die Feder (36) als Schenkelfeder ausgebildet ist, die auf einem Tragbolzen (45) des Führungsschlittens (15) gehalten ist und deren einer Federteil (38) aus einem abstehenden Federschenkel besteht, der am Führungsschlitten (15) abgestützt ist, und deren anderer Federteil (40) aus einem etwa stabförmigen, längeren Federschenkel (41) besteht, der am Lappen (42) des Führungsschlittens (15) abgestützt ist.

14. Schutzhaube nach Anspruch 12 oder 13, **dadurch gekennzeichnet,** daß das Widerlager (37) an der Schutzhaube (12) aus einem zum Endabschnitt (43) der Feder (36) hin gerichteten Hakenteil (44) gebildet ist.

15. Schutzhaube nach einem Ansprüche 1 - 14, **dadurch gekennzeichnet,** daß der Bolzen (27) und der Tragbolzen (45) fest miteinander verbunden sind oder beide ein einstückiges Teil bilden.

16. Schutzhaube nach einem der Ansprüche 1 - 15, **dadurch gekennzeichnet,** daß der abstehende Lagerbock (32) des Führungsschlittens (15) auch den Tragbolzen (45) aufnimmt.

17. Schutzhaube nach einem der Ansprüche 1 - 16, **dadurch gekennzeichnet,** daß der abstehende Lagerbock (32) des Führungsschlittens (15) mit einem Lagerbockteil (35) ein Widerlager für den einen Federteil (38), insbesondere Federschenkel, der Feder (36) bildet.

18. Schutzhaube nach einem der Ansprüche 12 - 17, **dadurch gekennzeichnet,** daß der Lappen (42) des Führungsschlittens (15) Teil des Lagerbockes (32) ist.

19. Schutzhaube nach einem der Ansprüche 2 - 18, **dadurch gekennzeichnet,** daß die Riegelvorrichtung (18) eine federbelastete, von Hand entriegelbare Sperrklinke (51) und eine Führungslasche (54) aufweist, in die die Sperrklinke (51) zumindest in einer Stellung des Führungsschlittens (15), vorzugsweise zumindest in einer um die Lagerachse (19) des Renkverschlusses (17) geschwenkten Stellung, verriegelnd eingreift.

20. Schutzhaube nach Anspruch 19, **dadurch gekennzeichnet,** daß die Sperrklinke (51) der Riegelvorrichtung (18) in zumindest einer weiteren Stellung des Führungsschlittens (15), insbesondere in dessen Funktionsstellung, in die Führungslasche (54) verriegelnd eingreift.

21. Schutzhaube nach Anspruch 19 oder 20, **dadurch gekennzeichnet,** daß die Sperrklinke (51) an der Schutzhaube (12) und die Führungslasche (54) am Führungsschlitten (15) angeordnet sind.

22. Schutzhaube nach einem der Ansprüche 19 - 21, **dadurch gekennzeichnet,** daß die Führungslasche (54) als Kreisbogensegmentteil ausgebildet ist, der mit einem Ende (55) gelenkig an dem Führungsschlitten (15) angreift.

23. Schutzhaube nach einem der Ansprüche 19 - 22, **dadurch gekennzeichnet,** daß die Schutzhaube (12) eine der Form der Führungslasche (54) angepaßte Aufnahme (56), z.B. einen Schlitz, aufweist, in der die Führungslasche (54) geführt ist.

24. Schutzhaube nach einem der Ansprüche 19 - 23, **dadurch gekennzeichnet,** daß die Führungslasche (54) ein oder mehrere entlang ihrer Bogenform beabstandete Anschläge (57, 58) für die Sperrklinke (51) aufweist.

25. Schutzhaube nach einem der Ansprüche 19 - 24, **dadurch gekennzeichnet,** daß die Führungslasche (54) entlang ihrer Bogenform ein oder mehrere beabstandete und aufeinanderfolgende Durchgriffsöffnungen (59,60) enthält, die von der Sperrklinke (51) durchgreifbar sind, wobei das jeweilige Ende der Durchgriffsöffnung (59,60) den Anschlag (57 bzw. 58) bildet.

26. Schutzhaube nach einem der Ansprüche 2 - 17, **dadurch gekennzeichnet,** daß die Riegelvorrichtung einen Knebelschalter aufweist, mittels dessen der Führungsschlitten (15) in jeder gewünschten Stellung blockierbar ist.

## Claims

1. Protective hood for a hand-guided machine tool (10) having a rotating tool (11), such as a grinding wheel, circular saw or the like, and having a guide slide (15) which can be detachably fastened to the protective hood (12) by means of a fastening device (16), characterized in that the fastening device (16) has a bayonet fitting (17) which is provided in an end region of the guide slide (15) and of the protective hood (12), said bayonet fitting (17) having at least one bearing opening (21, 22) and at least one pin (27) passing transversely through the latter, and in that the pin (27) has a flat (28, 29) in the region passing through the bearing opening (21, 22) and the bearing opening (21, 22) has a radial slot opening (23, 24), corresponding approximately to the width of the flat (28, 29), for the insertion of the flat (28, 29) in an orientation approximately parallel thereto.

2. Protective hood according to Claim 1, characterized in that the fastening device (16) has, at a distance from the bayonet fitting (17), a releasable locking device (18) between the guide slide (15) and the protective hood (12), whereby the guide slide (15) attached can be locked in one or more positions on the protective hood (12).

3. Protective hood according to Claim 1 or 2, characterized in that the guide slide can be mounted on the protective hood (12) for pivoting about the bearing axis (19) of the bayonet fitting (17).

4. Protective hood according to one of Claims 1 to 3, characterized in that the at least one flat (28, 29) on the pin (27) is oriented with its flat sides approximately parallel to the guide surface (30) of the guide slide (15).

5. Protective hood according to one of Claims 1 to 4, characterized in that the pin (27) is fastened to an end region of the guide slide (15).

6. Protective hood according to one of Claims 1 to 5, characterized in that the pin (27) is disposed on a projecting bearing support (32), preferably formed by bent-over lugs (33 - 35), on the guide slide (15).

7. Protective hood according to one of Claims 1 to 6, characterized in that the protective hood (12) has in an end region in each wall (13, 14) a bearing opening (21, 22) which through a respective slot opening (23, 24) is open outwardly, for example downwardly.

8. Protective hood according to Claim 7, characterized in that an outwardly widening inlet opening (25, 26) adjoins each slot opening (23, 24).

9. Protective hood according to one of Claims 1 to 8, characterized in that the pin (27) has two equidirectional flats (28, 29) arranged at a distance from one another in the longitudinal direction of the pin.

10. Protective hood according to one of Claims 1 to 9, characterized in that the guide slide has a spring (36) which is held on it, preferably in the region of the bayonet fitting (17), and which, when the guide slide (15) is coupled into the protective hood (12) and pivoted into its operative position, can be brought into engagement with an abutment (37) on the protective hood (12) and subjects the guide slide (15) to spring loading, about the bearing axis (19) of the bayonet fitting (17), out of its operative position into a position swivelled away therefrom.

11. Protective hood according to Claim 10, characterized in that the spring (36) is supported by a spring part (38) against the guide slide (15).

12. Protective hood according to Claim 10 or 11, characterized in that the other spring part (40) is supported against a lug (42) on the guide slide (15) and has an end portion (43) projecting beyond the lug (42) and, when the guide slide (15) is pivoted about the bearing axis (19) of the bayonet fitting (17), extending in the direction of its operative position within a path in which a stop is situated which projects transversely on the protective hood (12) and serves as an abutment (37) against which the end portion (43) can then be supported.

13. Protective hood according to one of Claims 1 to 12, characterized in that the spring (36) is in the form of a torsion coil spring which is held on a carrier pin (45) of the guide slide (15) and of which one spring part (38) consists of a projecting spring arm which is supported on the guide slide (15), while its other spring part (40) consists of a longer, approximately rod-shaped spring arm (41) which is supported against the lug (42) on the guide slide (15).

14. Protective hood according to Claim 12 or 13, characterized in that the abutment (37) on the protective hood (12) is composed of a hook part (44) directed towards the end portion (43) of the spring (36).

15. Protective hood according to one of Claims 1 to 14, characterized in that the pin (27) and the carrier pin (45) are joined fast to one another or form together a one-piece part.

16. Protective hood according to one of Claims 1 to 15, characterized in that the projecting bearing support (32) of the guide slide (15) also receives the carrier pin (45).

17. Protective hood according to one of Claims 1 to 16, characterized in that the projecting bearing support (32) of the guide slide (15) forms by a bearing support part (35) an abutment for the one spring part (38), particularly a spring arm, of the spring (36).

18. Protective hood according to one of Claims 12 to 17, characterized in that the lug (42) of the guide slide (15) is part of the bearing support (32).

19. Protective hood according to one of Claims 2 to 18, characterized in that the locking device (18) has a spring-loaded, manually releasable catch (51) and a guide bar (54) in which the catch (51) lockingly engages at least in one position of the guide slide (15), preferably at least in a position in which it is pivoted about the bearing axis (19) of the bayonet fitting (17).

20. Protective hood according to Claim 19, characterized in that the catch (51) of the locking device (18) lockingly engages in the guide bar (54) in at least one additional position of the guide slide (15), particularly in the operative position of the latter.

21. Protective hood according to Claim 19 or 20, characterized in that the catch (51) is arranged on the protective hood (12) and the guide bar (54) is arranged on the guide slide (15).

22. Protective hood according to one of Claims 19 to 21, characterized in that the guide bar (54) is in the form of a part of a circular arc segment which at one end (55) acts pivotally on the guide slide (15).

23. Protective hood according to one of Claims 19 to 22, characterized in that the protective hood (12) has a seating (56), for example a slot, which matches the shape of the guide bar (54) and in which the guide bar (54) is guided.

24. Protective hood according to one of Claims 19 to 23, characterized in that the guide bar (54) has one or more stops (57, 58), spaced out along its arcuate shape, for the catch (51).

25. Protective hood according to one of Claims 19 to 24, characterized in that the guide bar (54) has one or more through openings (59, 60), spaced out along its arcuate shape and following one another, through which the catch (51) can pass, the end of the respective through opening (59, 60) forming the stop (57 and 58 respectively).

26. Protective hood according to one of Claims 2 to 17, characterized in that the locking device has a toggle switch by means of which the guide slide (15) can be secured in any desired position.

## Revendications

1. Capot de protection destiné à une machine portative (10) équipée d'un outil tournant (11) tel qu'un disque abrasif, une scie circulaire ou autre, et munie d'un sabot de guidage (15) relié au capot de protection (12) par l'intermédiaire d'un dispositif de fixation (16) amovible, caractérisé en ce que ce dispositif (16) est équipé d'une fermeture à baïonnette (17), montée à une des extrémités du sabot (15) et également du capot (12), ce verrouillage comportant au moins une ouverture de portée (21, 22) et au moins une broche (27) traversant ces ouvertures et présentant au niveau de chacune de celles-ci, une zone à méplats (28, 29), tandis que ces ouvertures sont ouvertes par une fente radiale (23, 24) de largeur correspondant sensiblement à l'épaisseur séparant les faces des plats des zones (28, 29) de manière à permettre à celles-ci d'être engagées dans les fentes, selon une direction sensiblement parallèle aux plats.

2. Capot de protection selon la revendication 1, caractérisé en ce que le dispositif de fixation (16) comporte, à une certaine distance de la fermeture à baïonnette (17), un dispositif de verrouillage (18) amovible, entre le sabot (15) et le capot de protection (12) permettant de bloquer le sabot (15) sur le capot (12) dans une ou plusieurs positions.

3. Capot de protection selon la revendication 1 ou 2, caractérisé en ce que le sabot de guidage peut être monté sur le capot de protection (12) et peut tourner autour de l'axe (19) du verrouillage à baïonnette (17).

4. Capot de protection selon une des revendications 1 à 3, caractérisé en ce qu'au moins une zone à méplats (28, 29) portée par la broche (27) a ses faces plates sensiblement parallèles à la surface de guidage (30) du sabot (15).

5. Capot de protection selon une des revendications 1 à 4, caractérisé en ce que la broche (27) est fixée sur une extrémité du sabot de guidage (15).

6. Capot de protection selon une des revendications 1 à 5, caractérisé en ce que la broche (27) est montée sur un chevalet (32) du sabot (15) surmontant celui-ci et constitué de pattes (33 à 35) repliées.

7. Capot de protection selon une des revendications 1 à 6, caractérisé en ce que le capot de protection (12) présente à une de ses extrémités, dans chaque paroi (13, 14) une ouverture (21, 22) communiquant avec l'extérieur, vers le bas par exemple, par une fente (23, 24).

8. Capot de protection selon une des revendications 1 à 7, caractérisé en ce que chaque fente (23, 24) est prolongée vers l'extérieur par une ouverture s'évasant dans cette direction.

9. Capot de protection selon une des revendication 1 à 8, caractérisé en ce que la broche (27) comporte deux zones à méplats (28, 29) de même direction, espacées l'une de l'autre longitudinalement.

10. Capot de protection selon une des revendications 1 à 9, caractérisé en ce que le sabot porte, dans la zone du verrou à baïonnette (17) de préférence, un ressort (36) qui, lorsqu'on emmanche le sabot (15) dans le capot (12) et qu'on le fait basculer pour l'amener en position de fonctionnement, vient en prise avec une butée (37) du capot (12) et exerce sur le sabot (15) une poussée élastique tendant à la faire tourner autour de l'axe (19) du verrou (17) pour l'écarter de sa position de fonctionnement vers le bas.

11. Capot de protection selon la revendication 10, caractérisé en ce que le ressort (36) s'appuie par une partie (38) sur le sabot (15).

12. Capot de protection selon la revendication 10 ou 11, caractérisé en ce que l'autre partie (40) du ressort est en appui sur une patte (42) du sabot (15) et par son extrémité (43) dépassant de la patte (42) décrit, lorsque le sabot (15) tourne autour de l'axe (19) du blocage à baïonnette en direction de sa position de fonctionnement, un parcours sur lequel se trouve une butée montée en départ transversal sur le capot de protection (12) et qui sert alors d'appui (37) à l'extrémité (43).

13. Capot de protection selon une des revendications 1 à 12, caractérisé en ce que le ressort (36) est un ressort à branches monté sur un pivot porteur (45) monté lui-même sur le sabot (15), une partie (38) du ressort comportant une branche dépassant, en appui sur le sabot (15) tandis que l'autre partie (40) du ressort est terminée par une branche rectiligne plus longue (41), en appui sur la patte (42) du sabot de guidage (15).

14. Capot de protection selon la revendication 12 ou 13, caractérisé en ce que la butée (37) portée par le capot (12) est une pièce (44) en forme de crochet dirigée vers le ressort (36).

15. Capot de protection selon une des revendications 1 à 4, caractérisé en ce que la broche (27) et le pivot porteur (45) sont solidaires ou ne constituent qu'une seule pièce.

16. Capot de protection selon une des revendications 1 à 15, caractérisé en ce que le chevalet (32) surmontant le sabot (15) sert également de monture au pivot porteur (45).

17. Capot de protection selon une des revendications 1 à 16, caractérisé en ce qu'une partie (35) du chevalet (32) du sabot (15) sert de butée à la partie (38), en particulier la branche, du ressort (36).

18. Capot de protection selon une des revendications 12 à 17, caractérisé en ce que la patte (42) du sabot de guidage (15) fait partie du chevalet (32).

19. Capot de protection selon une des revendications 2 à 18, caractérisé en ce que le dispositif de verrouillage (18) comporte un cliquet d'arrêt (51) libérable à la main et une tige de guidage (54) sur laquelle vient en prise de verrouillage le cliquet (51) pour au moins une position du sabot (15), de préférence une position obtenue par basculement autour de l'axe (19) du verrou à baïonnette (17).

20. Capot de protection selon la revendication 19, caractérisé en ce que le cliquet d'arrêt (51) vient en prise de verrouillage avec la tige de guidage (54) dans au moins une autre position du sabot (15), en particulier la position de fonctionnement.

21. Capot de protection selon la revendication 19 ou 20, caractérisé en ce que le cliquet d'arrêt (51) est monté sur le capot de protection (12) et la tige de guidage (54) est montée sur le sabot de guidage (15).

22. Capot de protection selon une des revendications 19 à 21, caractérisé en ce que la tige de guidage (54) est une pièce en arc de cercle, dont une extrémité (55) est articulée sur le sabot (15).

23. Capot de protection selon une des revendications 19 à 22, caractérisé en ce qu'il comporte un logement (56) par exemple une rainure, ayant la forme de la tige de guidage (54) et à l'intérieur duquel cette tige coulisse.

24. Capot de protection selon une des revendications 19 à 23, caractérisé en ce que la tige de guidage (54) porte, destinées au cliquet d'arrêt (51) une ou plusieurs butées (57, 58) espacées le long de l'arc de cercle.

25. Capot de protection selon une des revendications 19 à 24, caractérisé en ce que la tige de guidage (54) présente une ou plusieurs ouvertures d'engagement (59, 60) espacées le long de son arc et dans lesquelles le cliquet d'arrêt (51) peut venir en prise, l'extrémité de chaque ouverture (59, 60) constituant butée (57 ou 58).

26. Capot de protection selon une des revendications 2 à 17, caractérisé en ce que le dispositif de verrouillage comporte un blocage rotatif à serrage permettant de maintenir le sabot (15) dans toute positon souhaitée.
